# EUROPÄISCHE PATENTSCHRIFT

(11) **EP 3 414 751 B1**
(45) Veröffentlichungstag und Bekanntmachung des Hinweises auf die Patenterteilung: **04.11.2020**
(21) Anmeldenummer: 17710721.6
(22) Anmeldetag: 13.03.2017
(51) Int. Cl.: G09B 9/00, A01K 15/02, G06T 19/00

(54) **SIMULATOR FÜR EIN TRAINING EINES WINDENFÜHRERS**
SIMULATOR FOR THE TRAINING OF A WINCH OPERATOR
SIMULATEUR CONÇU POUR UN ENTRAÎNEMENT D'UN TREUILLISTE

(30) Priorität: 14.03.2016 DE 102016104569
(43) Veröffentlichungstag der Anmeldung: 19.12.2018
(73) Patentinhaber: Rheinmetall Defence Electronics GmbH, 28309 Bremen (DE)
(72) Erfinder: FINKE, Holger, 28309 Bremen (DE); GROTELÜSCHEN, Volker, 28039 Bremen (DE)
(74) Vertreter: Horn Kleimann Waitzhofer Patentanwälte PartG mbB
(86) Internationale Anmeldenummer: PCT/EP2017/055794
(87) Internationale Veröffentlichungsnummer: WO 2017/157830

(56) Entgegenhaltungen:
- WO-A1-2012/113686
- FR-A1- 2 615 400
- US-A- 5 484 360
- US-A1- 2007 035 561
- US-A1- 2010 245 387
- DATABASE WPI Week 201465 Thomson Scientific, London, GB; AN 2014-R98294 XP002770102, & CN 103 915 002 A (UNIV HENAN POLYTECHNIC) 9. Juli 2014 (2014-07-09)

## Beschreibung

Die vorliegende Erfindung betrifft einen Simulator für ein Training eines Windenführers an einer Winde, insbesondere eines Hubschraubers. Ferner betrifft die vorliegende Erfindung einen Container, insbesondere Fracht- oder Schiffscontainer, mit einem solchen Simulator. Des Weiteren betrifft die vorliegende Erfindung ein Verfahren zum Herstellen eines Simulators für ein Training eines Windenführers an einer Winde.

Das technische Gebiet der Erfindung betrifft Simulatoren oder Simulationssysteme, welche Nutzer oder Personen für die Nutzung von Apparaturen oder Vorrichtungen trainieren sollen. Vorliegend ist das Trainingsziel die zuverlässige Aufgabenausführung des Windenführers beim Auf- und Abwinden von Lasten oder Personen aus einem fliegenden Gerät, wie beispielsweise einem Hubschrauber, mittels einer Seilwinde. Insbesondere bei Suchmissionen und Rettungsmissionen in unzugänglichen Gebieten und schwierigem Terrain, zum Beispiel im Gebirge oder auf See, ist ein Schwerpunkt für das Aufgabengebiet des Windenführers eines Hubschraubers.

Für die verlässliche und sichere Aufgabenausführung ist eine umfassende Ausbildung des Windenführers notwendig. Die Ausbildung des Windenführers ist neben theoretischen Schulungsinhalten vor allem von praktischen Übungen geprägt.

Die praktische Ausbildung des Windenführers während des realen Hubschrauberflugs ist dabei nicht nur extrem kostenintensiv, sondern für die beteiligten Personen auch mit erheblichem Gefahrenpotential verbunden. Darum bietet sich für die Übung der Aufgaben des Windenführers die Verwendung von Trainingsmitteln an, welche sowohl eine realitätsnahe Übung ermöglichen als auch sicher und verhältnismäßig kostengünstig angewendet werden können. Auf diese Weise können die Ausbildungsdauer an dem realen Hubschrauber minimiert und somit Kosten gesenkt werden. Gleichzeitig verringert sich das Gefahrenpotential der in Ausbildung befindlichen Personen, weil die Bedienungs- und Handlungsfähigkeiten auch in schwierigen Notsituationen auf realitätsnahe Weise bei der simulierten Ausbildung sicher trainiert werden können.

Hinsichtlich der Ausbildung des Windenführers gibt es verschiedene Anforderungen, die an das Trainingsgerät oder den Simulator gestellt werden können. Insbesondere dem Trainieren von Notfallszenarien, wie zum Beispiel dem Verhaken des Windenseils an einem Baum, ist eine wesentliche Bedeutung bei der Ausbildung des Windenführers beizumessen. Schließlich ist gerade die Kombination aller Anforderungen eine zentrale Funktion eines ganzheitlichen Trainings, wie es herkömmlicherweise nur der reale Einsatz mit einem fliegenden Hubschrauber bieten kann.

Es existieren herkömmliche Lösungen mit großem Platzbedarf, bei welchen ein Hubschraubermodell einschließlich voll funktionsfähiger Winde an einem Kransystem aufgehängt wird, wobei sich der Kran in alle Richtungen bewegen und mit variablen Geschwindigkeiten drehen kann. Die Wirkungslänge des Windenseils ist dabei regelmäßig beispielsweise durch eine Hallenhöhe oder durch den Kran begrenzt, zumeist auf eine Länge deutlich unter der realen Länge des Windenseils von 50 bis 80 Meter. Die bewusst angehobene Arbeitshöhe der trainierenden Personen birgt trotz aller Sicherheitsvorkehrungen, wie Gurten, ein Restrisiko des Absturzes und letztlich ist eine realitätsnahe Darstellung der Sichtverhältnisse bei den gegebenen Abmessungen des Trainingsbereichs technisch nicht sinnvoll umsetzbar.

Das Dokument WO 2012/113686 A1 beschreibt einen Simulator zur Ausbildung einer Hubschrauberbesatzung. Ein weiterer herkömmlicher Simulator ist dem Dokument FR 2 615 400 A1 zu entnehmen. Eine Kombination eines Endlosseiles mit Trommeln zum Auf- und Abrollen des Endlosseiles ist in diesen Dokumenten nicht offenbart.

Vor diesem Hintergrund besteht eine Aufgabe der vorliegenden Erfindung darin, die Simulation für ein Training eines Windenführers an einer Winde zu verbessern.

Die Erfindung ist den Ansprüchen 1 und 12 definiert.

Demgemäß wird ein Simulator für ein Training eines Windenführers an einer Winde, insbesondere eines Hubschraubers, mit einer Trainings-Box vorgeschlagen. Die Trainings-Box umfasst eine Winden-Replik mit einem Windenseil, eine Plattform für den Windenführer zur Betätigung des Windenseils und eine Darstellungs-Einrichtung zur Ausgabe einer simulierten Sichtdarstellung beim Betätigen des Windenseils.

Der Simulator kann auch als Simulations-System, als System-Trainer, als Trainingsgerät oder als Trainingsmittel bezeichnet werden. Die Trainings-Box kann auch als Trainings-Raum oder mobiles Gehäuse des Simulators bezeichnet werden.

Dadurch wird ein mobiles und kostengünstiges Trainingsmittel für die umfangreiche Ausbildung des Windenführers in Hubschraubern bereitgestellt, welches alle Bestandteile des Aufgabenbereichs einschließlich Notfallszenarien eines Windenführers in einer realistisch wahrnehmbaren Umgebung mit realistischen Funktionalitäten abbilden kann. Die realistischen Funktionalitäten werden durch das Windenseil und die Plattform bereitgestellt, von welcher der Windenführer die Winden-Replik bedienen kann. Die realistisch wahrnehmbare Umgebung wird durch die simulierte Sichtdarstellung beim Betätigen des Windenseils bereitgestellt.

Hinsichtlich der Ausbildung des Windenführers kann der vorliegende Simulator vorteilhafterweise eine Vielzahl von Anforderungen erfüllen. Diese Anforderungen umfassen unter anderem die Sicherheit des Trainierenden, realitätsnahe Trainingsfunktionen, wie Seilbewegungen und Kommunikation mit dem Piloten, eine realistische Darstellung der sichtbaren Trainingsumgebung und zugehörige Randbedingungen, wie Vibrationen, Bewegungen, Lärm, Hitze oder Wind. Ein ganzheitliches Training des Windenführers durch die Trainings-Box des Simulators ist vorliegend für den zu trainierenden Windenführer auch bei der Übung von Notfallszenarien stets mit angemessener Sicherheit für Leib und Leben möglich.

Auch die Mobilität des Simulators durch die Integration in der Trainings-Box ist sehr vorteilhaft, weil hierdurch die örtliche Bindung des Trainings entfallen kann. Damit kann derselbe Simulator an einer Vielzahl von verschiedenen Orten in der Welt eingesetzt werden.

Um eine möglichst große Bandbreite von verfügbaren Budgets zur Beschaffung eines Simulators bedienen zu können, ist der Simulator insbesondere modular zusammensetzbar. Folglich kann der Simulator aus Grundmodulen, Aufbaumodulen und Sondermodulen bestehen, welche nach Bedarf und Budget entsprechend konfiguriert und zu einem späteren Zeitpunkt in der Trainings-Box erweitert werden können.

Ferner werden vorteilhafterweise die sonst üblichen Trainingskosten für die Ausbildung zum Windenführer signifikant gesenkt. Die mobile Ausführung des Simulators erweitert die Nutzungsmöglichkeiten und damit die Menge der möglichen Nutzer und auszubildenden Windenführer.

Insbesondere bildet die Plattform die Standmöglichkeit für den Windenführer, wenn er das Windenseil in der Trainings-Box betätigt. Insbesondere umfasst die Plattform eine Platte sowie einen Tritt oder alternativ die Replik einer Kufe eines Hubschraubers.

Gemäß einer Ausführungsform weist zumindest eine Wand der Trainings-Box eine Schlüsselfarbe zur Anwendung einer Blue-Box-Technik auf.

Details zu der Schlüsselfarbe und der Blue-Box-Technik ergeben sich aus der Offenlegungsschrift DE 10 2012 207 782 A1 der Anmelderin, welche hiermit referenziert wird. Die Schlüsselfarbe ist beispielsweise weiß.

Gemäß einer nicht beanspruchten Ausführungsform weisen alle Wände der Trainings-Box die Schlüsselfarbe zur Anwendung einer Blue-Box-Technik auf.

Gemäß einer weiteren Ausführungsform ist die Darstellungs-Einrichtung als eine durch den Windenführer tragbare Virtual-Reality-Brille zur Ausgabe der simulierten Sichtdarstellung beim Betätigen des Windenseils ausgebildet.

Gemäß einer weiteren Ausführungsform ist die Virtual-Reality-Brille dazu eingerichtet, dem Windenführer die simulierte Sichtdarstellung als eine Augmented-Virtual-Reality beim Betätigen des Windenseils in der Trainings-Box auszugeben.

Vorteilhafterweise werden bei der Anwendung der Augmented-Virtual-Reality reale Bilder, insbesondere die der Hand des Windenführers und des Windenseils der Winden-Replik, mit virtuellen Bildern, beispielsweise Aufnahmen aus einem fliegenden Hubschrauber, überlagert. Damit kann der Windenführer an der realen Vorrichtung, hier der Winden-Replik, trainieren und hat aber den Eindruck tatsächlich in dem Hubschrauber zu fliegen.

Gemäß einer weiteren Ausführungsform ist die Virtual-Reality-Brille dazu eingerichtet, dem Windenführer die simulierte Sichtdarstellung als reine virtuelle Bilder beim Betätigen des Windenseils in der Trainings-Box auszugeben. Hierdurch umfasst die virtuelle Szene ausschließlich virtuelle Bilder. Beispielsweise ist die Virtual-Reality-Brille als ein Head-Mounted-Display mit integrierter Video-See-Through-Funktion ausgebildet.

Als nicht beanspruchte Alternative kann die Darstellungs-Einrichtung auch als eine Anzahl von Projektoren ausgebildet sein, welche die simulierte Sichtdarstellung als eine Projektion, beispielsweise an die Wände der Trainings-Box, ausbilden.

Gemäß der Erfindung umfasst die Winden-Replik zwei Trommeln, auf welche das Windenseil aufrollbar und abrollbar ist. Die Trommeln sind innerhalb der Trainings-Box und dienen dazu, das Ab- und Aufspulen des Windenseils an den Handflächen des Windenführers spürbar zu machen.

Gemäß der Erfindung ist ein Antrieb für eine jede der Trommeln vorgesehen. Dabei sind die Antriebe dazu eingerichtet, unterschiedliche Seilspannungen des Windenseils während des Trainings in der Trainings-Box einzustellen.

Durch die einstellbaren unterschiedlichen Seilspannungen können die in der Realität des Hubschraubers auftretenden variablen Zugspannungen, beispielsweise beim Transport unterschiedlich schwerer Lasten, vorteilhafterweise simuliert werden.

Gemäß einer nicht beanspruchten Ausführungsform sind die beiden Antriebe für die beiden Trommeln aufeinander synchronisiert.

Gemäß der Erfindung ist das Windenseil als ein Endlosseil ausgebildet. Das Endlosseil ist über eine Mehrzahl von Umlenkrollen in der Trainings-Box geführt. Zumindest für eine der Umlenkrollen ist ein Antrieb vorgesehen.

Gemäß einer nicht beanspruchten Ausführungsform ist einer der Umlenkrollen eine Beaufschlagungs-Vorrichtung zur Beaufschlagung des Endlosseils mit einer variablen Zugspannung zugeordnet.

Die Beaufschlagungs-Vorrichtung umfasst insbesondere einen Linear-Achsen-Antrieb zum Einstellen einer relativen Position der zugeordneten Umlenkrolle zu den weiteren Umlenkrollen.

Gemäß einer nicht beanspruchten Ausführungsform umfasst der Simulator eine durch den Windenführer betätigbare Fernbedienungs-Vorrichtung zur Fernbedienung des Antriebs. Durch die Fernbedienungs-Vorrichtung kann der trainierende Windenführer insbesondere die Auf- und Abbewegung des Windenseils steuern.

Gemäß einer weiteren Ausführungsform umfasst der Simulator zwei mit dem Windenseil gekoppelte Linear-Achsen-Antriebe zur Auslenkung des Windenseils entlang zweier orthogonaler Achsen in der Trainings-Box.

Damit kann das Windenseil nicht nur den Auf- und Abbewegungen sondern auch Auslenkungen in alle Richtungen unterliegen und damit dem Verhalten eines Windenseils in der Realität mit variablen Zugspannungen entsprechen. Der Linear-Achsen-Antrieb kann auch als Linear-Achsen-Portal bezeichnet werden.

Gemäß einer weiteren Ausführungsform umfasst der Simulator eine flexible Abdeckung in der Schlüsselfarbe über den zwei Linear-Achsen-Antrieben. Dabei weist die Abdeckung einen Schlitz entlang einer ersten der orthogonalen Achsen auf. Entlang einer zweiten der orthogonalen Achsen ist die Abdeckung synchron zu dem Linear-Achsen-Antrieb für die zweite orthogonale Achse bewegbar. Die flexible Abdeckung ist beispielsweise ein Tuch, eine Plane oder eine Folie.

Die Abdeckung hat die Funktion, dass der Windenführer die Linear-Achsen-Antriebe während des Trainings nicht sehen kann. Dies ist insbesondere vorteilhaft, da der Windenführer beim Training als reale Bilder insbesondere nur seine Hand und das Windenseil sehen soll, nicht aber die Linear-Achsen-Antriebe. In dem Bereich der Linear-Achsen-Antriebe soll der Windenführer während des Trainings virtuelle Bilder, beispielsweise aus einem fliegenden Hubschrauber, sehen.

Gemäß einer nicht beanspruchten Ausführungsform ist eine Mehrzahl von Umlenkrollen vorgesehen, um welche die Abdeckung in Endlosschleife laufen kann.

Gemäß einer nicht beanspruchten Ausführungsform sind in dem Schlitz entlang der ersten orthogonalen Achse Bürsten in der Schlüsselfarbe vorgesehen.

Die Bürsten in der Schlüsselfarbe verbessern die Möglichkeit der Darstellung von virtuellen Bildern, da sie - wie die Abdeckung - den Windenführer beim Training die Linear-Achsen-Antriebe nicht sehen lassen.

Gemäß einer weiteren Ausführungsform umfasst die Plattform eine Anzahl von Vibrationsgebern, welche dazu eingerichtet sind, die Plattform in vorbestimmte Schwingungen zu versetzen.

Gemäß einer nicht beanspruchten Ausführungsform umfasst die Plattform eine Platte, einen mit der Platte gekoppelten Tritt und eine Anzahl von Vibrationsgebern, welche dazu eingerichtet sind, die Platte und den Tritt in vorbestimmte Schwingungen zu versetzen.

Gemäß einer nicht beanspruchten Ausführungsform ist eine Steuereinheit zum Ansteuern der Vibrationsgeber vorgesehen. Dabei ist die Steuereinheit vorzugsweise dazu eingerichtet, die Vibrationsgeber derart anzusteuern, dass die vorbestimmten Schwingungen auf eine Rotorfrequenz des Rotors des Hubschraubers eingestellt sind.

Die Steuereinheit kann hardwaretechnisch und/oder auch softwaretechnisch implementiert sein. Bei einer hardwaretechnischen Implementierung kann die Steuereinheit als Vorrichtung oder als Teil einer Vorrichtung, zum Beispiel als Computer oder als Mikroprozessor ausgebildet sein. Bei einer softwaretechnischen Implementierung kann die Steuereinheit als Computerprogrammprodukt, als eine Funktion, als eine Routine, als Teil eines Programmcodes oder als ausführbares Objekt ausgebildet sein. Beispielsweise ist die Steuereinheit als die zentrale Steuerung der Trainings-Box ausgebildet.

Gemäß einer weiteren Ausführungsform umfasst die Trainings-Box eine Anzahl von Ventilatoren zur Simulation eines Rotorabwinds eines Rotors des Hubschraubers.

Insbesondere umfasst die Anzahl von Ventilatoren größere Ventilatoren, welche über dem Kopf des Windenführers angeordnet sind und den Rotorabwind des Rotors simulieren. Des Weiteren umfasst die Anzahl von Ventilatoren auch kleinere Ventilatoren, welche am Randbereich der Trainings-Box angeordnet sind und für eine Zirkulation des simulierten Rotorabwinds sorgen können. Ohne diese kleineren Ventilatoren könnten im Bodenbereich der Trainings-Box turbulente Strömungen entstehen, welche in der realen Anwendung einer Winde oder Rettungswinde eines Hubschraubers nicht existieren und damit das Training verfälschen könnten. Alternativ können die Ventilatoren auch von gleicher Größe sein. Die Ventilatoren am Randbereich der Trainings-Box können auch größer sein als die über dem Kopf des Windenführers angeordneten Ventilatoren.

Gemäß einer weiteren Ausführungsform umfasst die Trainings-Box zumindest eine Wärmequelle zur Simulation von Hitze einer Turbine des Hubschraubers. Die Wärmequelle ist insbesondere ein Infrarot-Strahler. Der Infrarot-Strahler ist insbesondere im Bereich des Oberkörpers oder des Kopfes des Windenführers in der Trainings-Box angeordnet.

Gemäß einer weiteren Ausführungsform umfasst die Trainings-Box eine Steuereinheit, welche dazu eingerichtet ist, die Energieversorgung der Trainings-Box in Abhängigkeit eines von einer Sicherheitseinrichtung bereitgestellten Notfallsignals abzuschalten. Die Sicherheitseinrichtung umfasst beispielsweise eine vor der Plattform angeordnete Lichtschranke. Für den Gefahrenfall, dass der Windenführer beispielsweise mit einem seiner Füße den Linear-Achsen-Antrieben zu nahe käme, löst die Lichtschranke aus und die damit gekoppelte Steuereinheit schaltet die Energieversorgung der Trainings-Box ab.

Gemäß einer nicht beanspruchten Ausführungsform hat die Trainings-Box die folgenden, beispielhaften Abmessungen: 2600 mm Breite, 1500 mm Tiefe und 2400 mm Höhe. Dies entspricht insbesondere dem doppelten Rastermaß in der Breite. Außerdem wird ein Container mit einem Rastermaß, in welchem eine Mehrzahl von Trainings-Boxen nebeneinander anordenbar ist, und mit einer Anzahl von in dem Rastermaß angeordneten Simulatoren vorgeschlagen. Der jeweilige Simulator ist insbesondere wie oben beschrieben ausgebildet. Der Container ist insbesondere ein Frachtcontainer oder ein Schiffscontainer. Insbesondere umfasst die Mehrzahl von Trainings-Boxen des Containers eine erste Gruppe von Trainings-boxen für wie oben erläuterte Simulatoren für ein Training eines Windenführers sowie eine zweite Gruppe von Trainings-Boxen für andere Simulatoren, beispielsweise für Piloten. Dabei ist es vorteilhaft, dass ein Windenführer mit einem Piloten gleichzeitig trainieren kann, da in einem solchen Fall auch die Kommunikation zwischen dem Windenführer und dem Piloten trainiert werden kann. Der Container kann auf einfache und kostengünstige Weise an einen jeden Ort der Welt transportiert werden. Somit bildet der Container eine mobile Einheit für das gleichzeitige Training einer Mehrzahl von Windenführern und Piloten an den unterschiedlichsten Orten.

Ferner wird ein Verfahren zum Herstellen eines Simulators für ein Training eines Windenführers an einer Winde, insbesondere eines Hubschraubers, vorgeschlagen. Das Verfahren umfasst die folgenden Schritte:
Anordnen einer beanspruchten Winden-Replik mit einem Windenseil in einer Trainings-Box,
Anordnen einer Plattform für den Windenführer zur Betätigung des Windenseils in der Trainings-Box, und
Bereitstellen einer Darstellungs-Einrichtung zur Ausgabe einer simulierten Sichtdarstellung beim Betätigen des Windenseils, insbesondere einer durch den Windenführer tragbaren Virtual-Reality-Brille für eine simulierte Sichtdarstellung beim Betätigen des Windenseils in der Trainings-Box.

Die für den vorgeschlagenen Simulator beschriebenen Ausführungsformen und Merkmale gelten für das vorgeschlagene Verfahren entsprechend.

Weitere mögliche Implementierungen der Erfindung umfassen auch nicht explizit genannte Kombinationen von zuvor oder im Folgenden bezüglich der Ausführungsbeispiele beschriebenen Merkmale oder Ausführungsformen. Dabei wird der Fachmann auch Einzelaspekte als Verbesserungen oder Ergänzungen zu der jeweiligen Grundform der Erfindung hinzufügen.

Weitere vorteilhafte Ausgestaltungen und Aspekte der Erfindung sind Gegenstand der Unteransprüche sowie der im Folgenden beschriebenen Ausführungsbeispiele der Erfindung. Im Weiteren wird die Erfindung anhand von bevorzugten Ausführungsformen unter Bezugnahme auf die beigelegten Figuren näher erläutert.
- Fig. 1: zeigt ein schematisches Blockschaltbild eines nicht erfindungsgemäßen ersten Ausführungsbeispiels eines Simulators für ein Training eines Windenführers;
- Fig. 2: zeigt ein schematisches Blockschaltbild eines zweiten Ausführungsbeispiels eines Simulators für ein Training eines Windenführers;
- Fig. 3: zeigt eine schematische Darstellung eines Ausführungsbeispiels eines Tuchs für den Simulator nach Fig. 1 oder Fig. 2;
- Fig. 4: zeigt ein schematisches Blockschaltbild eines Ausführungsbeispiels eines Containers mit einer Anzahl von Simulatoren nach Fig. 1 oder Fig. 2; und
- Fig. 5: zeigt ein schematisches Ablaufdiagramm eines Ausführungsbeispiels eines Verfahrens zum Herstellen eines Simulators.

In den Figuren sind gleiche oder funktionsgleiche Elemente mit denselben Bezugszeichen versehen worden, sofern nichts anderes angegeben ist.

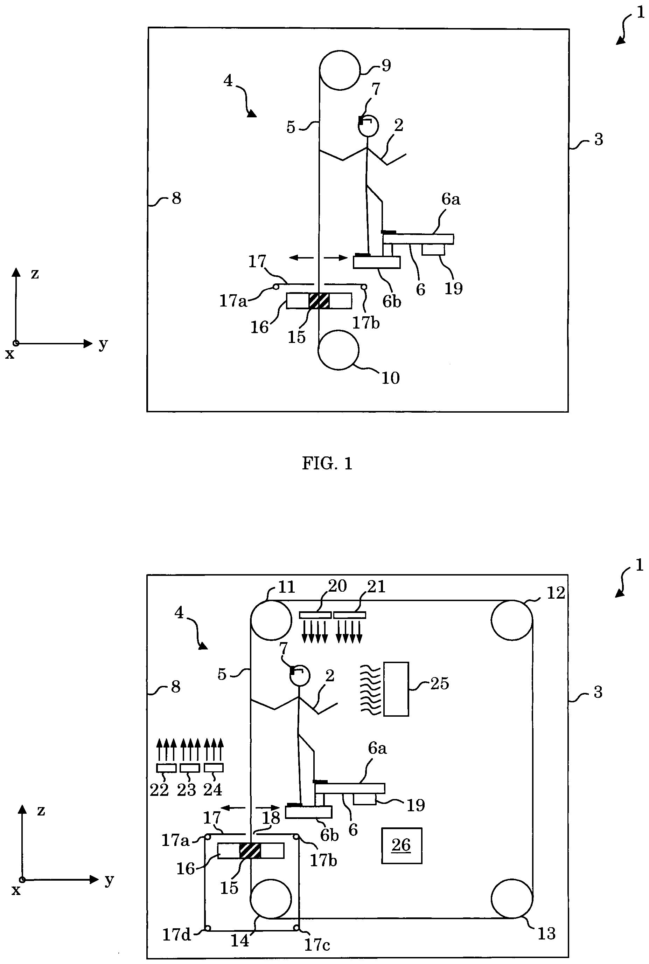

In Fig. 1 ist ein schematisches Blockschaltbild eines ersten. nicht erfindungsgemäßen Ausführungsbeispiels eines Simulators 1 für ein Training eines Windenführers 2, insbesondere eines Hubschraubers, dargestellt.

Der Simulator 1 umfasst eine Trainings-Box 3. Die Trainings-Box 3 kann auch als Trainings-Raum oder mobiles Gehäuse des Simulators 1 bezeichnet werden.

Die Trainings-Box 3 umfasst eine Winden-Replik 4 mit einem Windenseil 5. Des Weiteren umfasst die Trainings-Box 3 eine Plattform 6 für den Windenführer 2 zur Betätigung des Windenseils 5. Mit anderen Worten bildet die Plattform 6 die Standmöglichkeit für den Windenführer 2, wenn er das Windenseil 5 betätigt. Die Plattform 6 umfasst beispielsweise eine Platte 6a sowie einen Tritt 6b. Anstelle des Tritts 6b kann beispielsweise auch eine Replik einer Kufe eines Hubschraubers vorgesehen sein.

Die Plattform 6 umfasst eine Anzahl von Vibrationsgebern 19, welche dazu eingerichtet sind, die Plattform 6 in vorbestimmte Schwingungen zu versetzen. Die vorbestimmten Schwingungen entsprechen beispielsweise einer Rotorfrequenz des Rotors des Hubschraubers und tragen damit zu einer realitätsnahen Simulation für das Training des Windenführers 2 bei.

Ferner umfasst die Trainings-Box 3 eine Darstellungs-Einrichtung 7 zur Ausgabe einer simulierten Sichtdarstellung bei einem Betätigen des Windenseils 5 für den Windenführer 2. In dem Beispiel der Fig. 1 ist die Darstellungs-Einrichtung 7 als eine durch den Windenführer 2 tragbare Virtual-Reality-Brille 7 zur Ausgabe der simulierten Sichtdarstellung beim Betätigen des Windenseils 5 ausgebildet. Hierzu weisen die Wände 8 der Trainings-Box 3 eine Schlüsselfarbe (zum Beispiel Weiß) zur Anwendung der Blue-Box-Technik auf. Insbesondere ist die Virtual-Reality-Brille 7 dazu eingerichtet, dem Windenführer 2 die simulierte Sichtdarstellung als eine Augmented-Virtual-Reality beim Bestätigen des Windenseils 5 in der Trainings-Box 3 auszugeben. Alternativ kann die Virtual-Reality-Brille 7 auch dazu eingerichtet sein, dem Windenführer 2 die simulierte Sichtdarstellung als reine virtuelle Bilder beim Betätigen des Windenseils 5 in der Trainings-Box 3 auszugeben.

Ferner zeigt die Fig. 1, dass die Winden-Replik 4 zwei Trommeln 9, 10 umfasst, auf welche das Windenseil 5 aufrollbar und abrollbar ist. Jede der Trommeln 9, 10 umfasst insbesondere einen Antrieb. Folglich können die Trommeln 9, 10 auch als angetriebene Trommeln 9, 10 oder angetriebene Spulen bezeichnet werden.

Die Antriebe der Trommeln 9, 10 sind dazu eingerichtet, unterschiedliche Seilspannungen des Windenseils 5 während des Trainings in der Trainings-Box 3 einzustellen. Damit können unterschiedliche Szenarien, beispielsweise die Bergung unterschiedlicher Lasten mit unterschiedlichen Gewichten, simuliert werden.

Des Weiteren illustriert die Fig. 1, dass der Simulator 1 zwei mit dem Windenseil 5 gekoppelte Linear-Achsen-Antriebe 15, 16 zur Auslenkung des Windenseils 5 entlang zweier orthogonaler Achsen x, y in der Trainings-Box 3 aufweisen kann. Durch die Möglichkeit der simulierten Auslenkung des Windenseils 5 ist es möglich, unterschiedliche Szenarien für eine realistische Anwendung der Winde mittels der Winden-Replik 4 zu trainieren.

Über den Linear-Achsen-Antrieben 15, 16 ist ein Tuch 17 in der Schlüsselfarbe vorgesehen. Insbesondere bei der Anwendung einer Augmented-Virtual-Reality ist die Anbringung des Tuchs 17 über den beiden Linear-Achsen-Antrieben 15, 16 vorteilhaft, da der Windenführer 2 als reale Bilder nur seine Hand und das Windenseil 5 sehen soll, nicht aber die Linear-Achsen-Antriebe 15, 16.

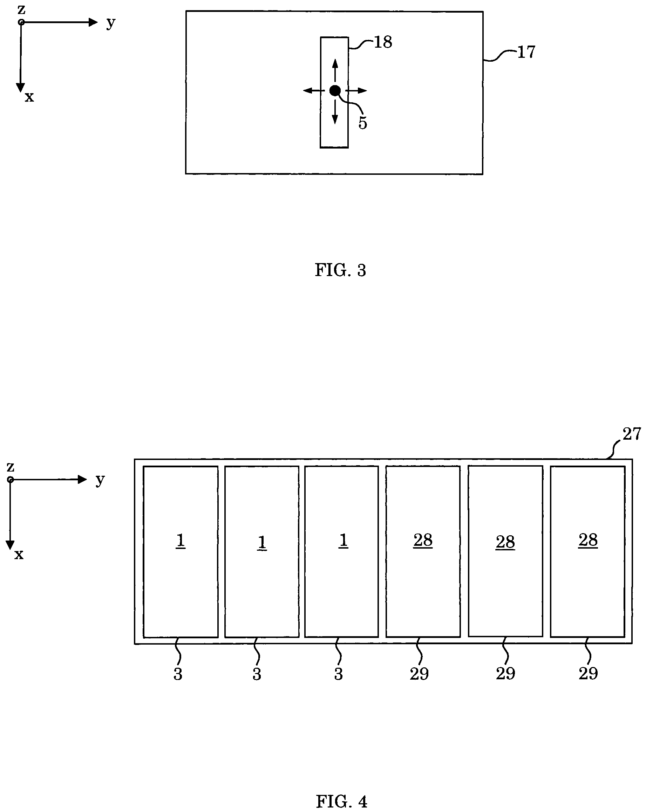

Hierzu zeigt die Fig. 3 eine schematische Darstellung eines Ausführungsbeispiels eines Tuchs 17. Das Tuch 17 weist einen Schlitz 18 entlang einer der orthogonalen Achsen x auf. Entlang einer zweiten der orthogonalen Achsen y ist das Tuch 17 synchron zu dem Linear-Achsen-Antrieb 16 für die zweite orthogonale Achse y bewegbar. Hierzu sind in dem Beispiel der Fig. 1 zwei Rollen 17a, 17b eingesetzt, auf welche das Tuch 17 teilweise aufrollbar und abrollbar ist. Durch das teilweise Auf- und Abrollen auf die Rollen 17a, 17b wird die Bewegbarkeit des Tuchs 17 in der zweiten orthogonalen Achse y bereitgestellt.

Fig. 2 zeigt ein schematisches Blockschaltbild eines zweiten Ausführungsbeispiels eines Simulators 1 für ein Training eines Windenführers 2 an einer Winde, insbesondere eines Hubschraubers. Das zweite Ausführungsbeispiel der Fig. 2 basiert auf dem ersten Ausführungsbeispiel der Fig. 1 und umfasst sämtliche Merkmale des ersten Ausführungsbeispiels der Fig. 1, bis auf die Führungen des Windenseils 5 und des Tuchs 17. Hierzu zeigt die Fig. 2 Alternativen.

Gemäß der Fig. 2 ist das Windenseil 5 als ein Endlosseil ausgebildet, welches über eine Mehrzahl von Umlenkrollen 11 - 14 in der Trainings-Box 3 geführt ist. Zumindest für eine der Umlenkrollen 11 - 14 ist ein Antrieb vorgesehen. Ähnlich dem Windenseil 5 ist das Tuch 17 über eine Mehrzahl von Umlenkrollen 17a - 17d geführt, durch welche das Tuch 17 in Art einer Endlosschleife hin und her bewegbar ist.

Die Trainings-Box 3 der Fig. 2 umfasst eine Anzahl von Ventilatoren 20 - 24 zur Simulation eines Rotorabwinds eines Rotors des Hubschraubers. Ohne Einschränkung der Allgemeinheit zeigt die Fig. 2 fünf Ventilatoren 20 - 24.

Die Ventilatoren 20 und 21 sind relativ zu den Ventilatoren 22 - 24 groß ausgebildet, über dem Kopf des Windenführers 2 angeordnet und simulieren damit den Rotorabwind des Rotors. Die Ventilatoren 22 - 24 sind am Randbereich der Trainings-Box 3 angeordnet und sorgen für eine Zirkulation des simulierten Rotorabwinds. Ohne die Ventilatoren 22 - 24 könnten im Bodenbereich der Trainings-Box 3 turbulente Strömungen entstehen, welche in der realen Anwendung einer Winde oder Rettungswinde eines Hubschraubers nicht existieren und damit auch nicht Teil des Trainings sein sollen. Die Ventilatoren 20 und 21 wirken insbesondere in einem ersten Kanal nach unten und die Ventilatoren 22 - 24 in einem zweiten, von dem ersten Kanal unabhängigen Kanal nach oben.

Ferner umfasst die Trainings-Box 3 der Fig. 2 eine Wärmequelle 25 zur Simulation von Hitze einer Turbine des Hubschraubers. Die Wärmequelle 25 ist beispielsweise als ein Infrarotstrahler ausgebildet und im Bereich des Oberkörpers oder des Kopfes des Windenführers 2 in der Trainings-Box 3 angeordnet.

Ferner illustriert die Fig. 2, dass die Trainings-Box 3 eine Steuereinheit 26 umfasst. Die Steuereinheit 26 ist insbesondere als zentrale Steuerung der Trainings-Box 3 ausgebildet. Die Steuereinheit 26 ist beispielsweise dazu eingerichtet, die Energieversorgung der Trainings-Box 3 in Abhängigkeit eines von einer Sicherheitseinrichtung bereitgestellten Notfallsignals (nicht gezeigt) abzuschalten. Die Sicherheitseinrichtung ist beispielsweise als eine vor der Plattform 6 angeordnete Lichtschranke (nicht gezeigt) ausgebildet. Für den Fall, dass der Windenführer 2 Gefahr liefe, mit seinem Fuß in die Linear-Achsen-Antriebe 15, 16 zu kommen, löst die Lichtschranke aus und die damit gekoppelte Steuereinheit 26 schaltet die Energieversorgung der Trainings-Box 3 ab, so dass die Linear-Achsen-Antriebe 15, 16 sicher still stehen.

Fig. 4 zeigt ein schematisches Blockschaltbild eines Ausführungsbeispiels eines Containers 27 mit einer Anzahl von Simulatoren 1 und 28. Der Container 27 hat ein Rastermaß, in welchem eine Mehrzahl von Trainings-Boxen 3, 29 nebeneinander anordenbar sind. Die Trainings-Boxen 3 sind Trainings-Boxen für Simulatoren 1 gemäß der Fig. 1 oder 2 und damit Trainings-Boxen für ein Training eines Windenführers 2. Die Trainings-Boxen 29 sind Trainings-Boxen für einen anderen Simulator 28, beispielsweise für einen Simulator eines Piloten eines Hubschraubers. Es ist vorteilhaft, dass ein Windenführer 2 mit einem Piloten gleichzeitig trainieren kann, da dann auch die Kommunikation zwischen dem Windenführer 2 und dem Piloten trainiert werden kann.

In dem Container 27 sind ohne Einschränkung der Allgemeinheit drei Simulatoren 1 für einen Windenführer und drei Simulatoren 28 für einen Piloten angeordnet. Damit können mit dem Container 27 beispielsweise drei Paare von Windenführern 2 und Piloten gemeinsam trainieren. Der Container 27 ist insbesondere ein Frachtcontainer oder ein Schiffscontainer und kann folglich an einen jeden Ort der Welt auf einfache Weise transportiert werden. Somit bildet der Container 27 eine mobile Einheit für das gleichzeitige Training einer Mehrzahl von Windenführern und Piloten.

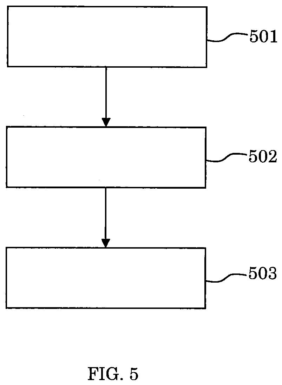

Fig. 5 zeigt ein schematisches Ablaufdiagramm eines Ausführungsbeispiels eines Verfahrens zum Herstellen eines Simulators 1 für ein Training eines Windenführers 2 an einer Winde, insbesondere eines Hubschraubers. Beispiele für solche Simulatoren 1 sind in den Fig. 1 und 2 dargestellt. Das Verfahren der Fig. 5 umfasst die folgenden Schritte 501, 502 und 503:
In Schritt 501 wird eine erfindungsgemäße Winden-Replik 4 mit einem Windenseil 5 in einer Trainings-Box 3 angeordnet.

In Schritt 502 wird eine Plattform 6 für den Windenführer 2 zum Betätigen des Windenseils 5 in der Trainings-Box 5 angeordnet.

In Schritt 503 wird eine Darstellungs-Einrichtung 7 zur Ausgabe einer simulierten Sichtdarstellung beim Betätigen des Windenseils 5 an den Windenführer 2 bereitgestellt. Die Darstellungs-Einrichtung 7 ist beispielsweise eine Virtual-Reality-Brille, die der Windenführer 2 tragen kann und welche dazu eingerichtet ist, die simulierte Sichtdarstellung als eine Augmented-Virtual-Reality beim Betätigen des Windenseils 5 für den Windenführer 2 beim Training in der Trainings-Box 3 auszugeben.

Als nicht beanspruchte Alternative kann die Darstellungs-Einrichtung 7 auch als eine Anzahl von Projektoren ausgebildet sein, welche die simulierte Sichtdarstellung als eine Projektion, beispielsweise an die Wände 8 der Trainings-Box 3, ausbilden.

Obwohl die vorliegende Erfindung anhand von Ausführungsbeispielen beschrieben wurde, ist sie vielfältig modifizierbar.

### BEZUGSZEICHENLISTE

- 1: Simulator
- 2: Windenführer
- 3: Trainings-Box
- 4: Winden-Replik
- 5: Windenseil
- 6: Plattform
- 6a: Platte
- 6b: Tritt
- 7: Darstellungs-Einrichtung, insbesondere Virtual-Reality-Brille
- 8: Wand
- 9: Trommel
- 10: Trommel
- 11: Umlenkrolle
- 12: Umlenkrolle
- 13: Umlenkrolle
- 14: Umlenkrolle
- 15: Linear-Achsen-Antrieb
- 16: Linear-Achsen-Antrieb
- 17: Abdeckung, insbesondere Tuch
- 17a: Umlenkrolle
- 17b: Umlenkrolle
- 17c: Umlenkrolle
- 17d: Umlenkrolle
- 18: Schlitz
- 19: Vibrationsgeber
- 20: Ventilator
- 21: Ventilator
- 22: Ventilator
- 23: Ventilator
- 24: Ventilator
- 25: Wärmequelle
- 26: Steuereinheit
- 27: Container
- 28: Simulator
- 29: Trainings-Box
- 501: Verfahrensschritt
- 502: Verfahrensschritt
- 503: Verfahrensschritt
- x: Achse
- y: Achse
- z: Achse

## Patentansprüche

1. Simulator (1) für ein Training eines Windenführers (2) an einer Winde, insbesondere eines Hubschraubers, mit einer Trainings-Box (3), welche umfasst:
eine Winden-Replik (4) mit einem Windenseil (5), wobei das Windenseil (5) als ein Endlosseil ausgebildet ist, welches über eine Mehrzahl von Umlenkrollen (11 - 14) in der Trainings-Box (3) geführt ist, wobei zumindest für eine der Umlenkrollen (11 - 14) ein Antrieb vorgesehen ist,
eine Plattform (6) für den Windenführer (2) zur Betätigung des Windenseils (5), und
eine Darstellungs-Einrichtung (7) zur Ausgabe einer simulierten Sichtdarstellung beim Betätigen des Windenseils (5),
wobei die Winden-Replik (4) zwei Trommeln (9, 10) umfasst, auf welche das Windenseil (5) aufrollbar und abrollbar ist, wobei ein Antrieb für eine jede der Trommeln (9, 10) vorgesehen ist, wobei die Antriebe dazu eingerichtet sind, unterschiedliche Seilspannungen des Windenseils (5) während des Trainings in der Trainings-Box (3) einzustellen.

2. Simulator nach Anspruch 1,
**dadurch gekennzeichnet,**
**dass** zumindest eine Wand (8) der Trainings-Box (3) eine Schlüsselfarbe zur Anwendung einer Blue-Box-Technik aufweist.

3. Simulator nach Anspruch 2,
**dadurch gekennzeichnet,**
**dass** die Darstellungs-Einrichtung (7) als eine durch den Windenführer (2) tragbare Virtual-Reality-Brille (7) zur Ausgabe der simulierten Sichtdarstellung beim Betätigen des Windenseils (5) ausgebildet ist.

4. Simulator nach Anspruch 3,
**dadurch gekennzeichnet,**
**dass** die Virtual-Reality-Brille (7) dazu eingerichtet ist, dem Windenführer (2) die simulierte Sichtdarstellung als eine Augmented-Virtual-Reality beim Betätigen des Windenseils (5) in der Trainings-Box (3) auszugeben.

5. Simulator nach einem der Ansprüche 1 bis 4,
**gekennzeichnet durch**
zwei mit dem Windenseil (5) gekoppelte Linear-Achsen-Antriebe (15, 16) zur Auslenkung des Windenseils (5) entlang zweier orthogonaler Achsen (x, y) in der Trainings-Box (3).

6. Simulator nach den Ansprüchen 2 und 5,
**dadurch gekennzeichnet,**
**dass** eine flexible Abdeckung (17) in der Schlüsselfarbe über den zwei Linear-Achsen-Antrieben (15, 16) vorgesehen ist, wobei die flexible Abdeckung (17) einen Schlitz (18) entlang einer ersten der orthogonalen Achsen (x) aufweist und entlang einer zweiten der orthogonalen Achsen (y) synchron zu dem Linear-Achsen-Antrieb (16) für die zweite orthogonale Achse (y) bewegbar ist.

7. Simulator nach einem der Ansprüche 1 bis 6,
**dadurch gekennzeichnet,**
**dass** der Plattform (6) eine Anzahl von Vibrationsgebern (19) zugeordnet ist, welche dazu eingerichtet sind, die Plattform (6) in vorbestimmte Schwingungen zu versetzen.

8. Simulator nach einem der Ansprüche 1 bis 7,
**dadurch gekennzeichnet,**
**dass** die Trainings-Box (3) eine Anzahl von Ventilatoren (20 - 24) zur Simulation eines Rotorabwinds eines Rotors des Hubschraubers umfasst.

9. Simulator nach einem der Ansprüche 1 bis 8,
**dadurch gekennzeichnet,**
**dass** die Trainings-Box (3) zumindest eine Wärmequelle (25) zur Simulation von Hitze einer Turbine des Hubschraubers umfasst.

10. Simulator nach einem der Ansprüche 1 bis 9,
**gekennzeichnet durch**
eine Steuereinheit (26), welche dazu eingerichtet ist, die Energieversorgung der Trainings-Box (3) in Abhängigkeit eines von einer Sicherheitseinrichtung bereitgestellten Notfallsignals abzuschalten.

11. Container (27), insbesondere Fracht- oder Schiffscontainer, mit einem Rastermaß, in welchem eine Mehrzahl von Trainings-Boxen (3, 29) nebeneinander anordenbar ist, und einer Anzahl von in dem Rastermaß angeordneten Simulatoren (1) nach einem der Ansprüche 1 bis 10.

12. Verfahren zum Herstellen eines Simulators (1) für ein Training eines Windenführers (2) an einer Winde, insbesondere eines Hubschraubers, mit:
Anordnen (501) einer Winden-Replik (4) mit einem Windenseil (5) in einer Trainings-Box (3), wobei das Windenseil (5) als ein Endlosseil ausgebildet ist, welches über eine Mehrzahl von Umlenkrollen (11 - 14) in der Trainings-Box (3) geführt ist, wobei zumindest für eine der Umlenkrollen (11 - 14) ein Antrieb vorgesehen ist, wobei die Winden-Replik (4) zwei Trommeln (9, 10) umfasst, auf welche das Windenseil (5) aufrollbar und abrollbar ist, wobei ein Antrieb für eine jede der Trommeln (9, 10) vorgesehen ist, wobei die Antriebe dazu eingerichtet sind, unterschiedliche Seilspannungen des Windenseils (5) während des Trainings in der Trainings-Box (3) einzustellen,
Anordnen (502) einer Plattform (6) für den Windenführer (2) zur Betätigung des Windenseils (5) in der Trainings-Box (3), und
Bereitstellen (503) einer Darstellungs-Einrichtung (7) zur Ausgabe einer simulierten Sichtdarstellung beim Betätigen des Windenseils (5).

## Claims

1. Simulator (1) for a training of a windlass leader (2) at a windlass, in particular of a helicopter, with a training box (3) which comprises:
a windlass-replica (4) with a windlass rope (5), wherein the windlass rope (5) is formed as an endless rope which is guided in the training box (3) via a plurality of guide rollers (11 - 14), wherein a drive for at least one of the guide rollers (11 - 14) is provided,
a platform (6) for the windlass leader (2) for actuating the windlass rope (5), and
a representation device (7) for outputting a simulated visual representation when actuating the windlass rope (5),
wherein the windlass-replica (4) comprises two reels (9, 10) on which the windlass rope (5) can be rolled up and rolled down, wherein a drive for each of the reels (9, 10) is provided, wherein the drives are configured to set different rope tensions of the windlass rope (5) during the training in the training box (3).

2. Simulator according to claim 1,
**characterized in that**,
at least a wall (8) of the training box (3) has a key color for applying a Blue-Box-technology.

3. Simulator according to claim 2,
**characterized in that**,
the representation device (7) is formed as virtual reality glasses (7) wearable by the windlass leader (2) for outputting a simulated visual representation when actuating the windlass rope (5).

4. Simulator according to claim 3,
**characterized in that**,
the virtual reality glasses (7) are configured to output the simulated visual representation as an augmented virtual reality to the windlass leader (2) when actuating the windlass rope (5) in the training box (3).

5. Simulator according to one of claims 1 to 4,
**characterized by**
two linear axes drives (15, 16) coupled with the windlass rope (5) for deflecting the windlass rope (5) along two orthogonal axes (x, y) in the training box (3).

6. Simulator according to claims 2 and 5,
**characterized in that**,
a flexible covering (17) in the key color is provided over the two linear axes drives (15, 16), wherein the flexible covering (17) has a slit (18) along a first of the orthogonal axes (x) and is moveable in synchronization with the linear axis drive (16) for the second orthogonal axis (y) along a second of the orthogonal axes (y).

7. Simulator according to one of claims 1 to 6,
**characterized in that**,
the platform (6) is assigned to a number of vibration transmitters (19) which are configured to put the platform (6) into predetermined oscillations.

8. Simulator according to one of claims 1 to 7,
**characterized in that**,
the training box (3) comprises a number of ventilators (20 - 24) for simulating a rotor downdraft of a rotor of the helicopter.

9. Simulator according to one of claims 1 to 8,
**characterized in that**,
the training box (3) comprises at least a heat source (25) for simulating a heat of a turbine of the helicopter.

10. Simulator according to one of claims 1 to 9,
**characterized by**
a control unit (26) which is configured to switch off the energy supply of the training box (3) in dependence on a distress signal provided by a security device.

11. Container (27), in particular a cargo container or a shipping container, with a grid dimension, in which a plurality of training boxes (3, 29) can be arranged side by side, and a number of simulators (1) according to one of claims 1 to 10 arranged in the grid dimension.

12. Method for providing a simulator (1) for a training of a windlass leader (2) at a windlass, in particular of a helicopter, with:
arranging (501) a windlass-replica (4) with a windlass rope (5) in a training box (3), wherein the windlass rope (5) is formed as an endless rope which is guided in the training box (3) via a plurality of guide rollers (11 - 14), wherein a drive for at least one of the guide rollers (11 - 14) is provided, wherein the windlass-replica (4) comprises two reels (9, 10) on which the windlass rope (5) can be rolled up and rolled down, wherein a drive for each of the reels (9, 10) is provided, wherein the drives are configured to set different rope tensions of the windlass rope (5) during the training in the training box (3),
arranging (502) a platform (6) for the windlass leader (2) for actuating the windlass rope (5) in the training box (3), and
providing (503) a representation device (7) for outputting a simulated visual representation when actuating the windlass rope (5).

## Revendications

1. Simulateur (1) pour la formation d'un treuilliste (2) à un treuil, en particulier d'un hélicoptère, avec un boîtier de formation (3) comprenant :
une réplique de treuil (4) avec un câble de treuil (5), le câble de treuil (5) étant conçu comme un câble sans fin qui est guidé par plusieurs poulies de renvoi (11 - 14) dans le boîtier de formation (3), un actionnement étant prévu pour au moins l'une des poulies de renvoi (11 - 14),
une plate-forme (6) pour de treuilliste (2) pour l'entraînement du câble de treuil (5), et
un dispositif d'affichage (7) permettant d'émettre un affichage visuel simulé lorsque le câble de treuil (5) est entraîné,
dans lequel la réplique de treuil (4) comprend deux touret (9, 10) sur lesquels le câble de treuil (5) peut être enroulé et déroulé, dans lequel un entraînement est prévu pour chacun des tambours (9, 10), dans lequel les entraînements sont adaptés pour régler différentes tensions du câble de treuil (5) pendant la formation dans le boîtier de formation (3).

2. Simulateur selon la revendication 1,
**caractérisé en ce**
**qu'**au moins un mur (8) du boîtier de formation (3) ait une couleur clé pour l'application d'une technique de blue-box.

3. Simulateur selon la revendication 2,
**caractérisé en ce que**
le dispositif d'affichage (7) est conçu comme des lunettes de réalité virtuelle (7) portables par le treuilliste (2) pour émettre l'affichage visuel simulé lorsque le câble de treuil (5) est actionné.

4. Simulateur selon la revendication 3,
**caractérisé en ce que**
les lunettes de réalité virtuelle (7) sont configurées de manière à ce que l'affichage visuel simulé soit transmis au treuilliste (2) sous forme de réalité virtuelle augmentée lorsque le câble de treuil (5) est actionné dans le boîtier de formation (3).

5. Simulateur selon l'une des revendications 1 à 4,
**caractérisé par**
deux entraînements à axe linéaire (15, 16) couplés au câble de treuil (5) pour faire dévier le câble de treuil (5) le long de deux axes orthogonaux (x, y) dans le boîtier de formation (3).

6. Simulateur selon les revendications 2 et 5,
**caractérisé en ce**
**qu'**un couvercle flexible (17) dans la couleur clé est prévu au-dessus des deux entraînements à axe linéaire (15, 16), le couvercle flexible (17) ayant une fente (18) le long d'un premier des axes orthogonaux (x) et étant mobile le long d'un deuxième des axes orthogonaux (y) en synchronisme avec l'entraînement à axe linéaire (16) pour le deuxième axe orthogonal (y).

7. Simulateur selon l'une des revendications 1 à 6,
**caractérisé en ce que**
la plate-forme (6) est dotée d'un nombre de divulgateurs de vibrations (19) qui sont configurés pour mettre la plate-forme (6) dans des oscillations prédéterminées.

8. Simulateur selon l'une des revendications 1 à 7,
**caractérisé en ce que**
le boîtier de formation (3) comprend un nombre de ventilateurs (20 - 24) pour simuler le vent sous un rotor de l'hélicoptère.

9. Simulateur selon l'une des revendications 1 à 8,
**caractérisé en ce que**
le boîtier de formation (3) comporte au moins une source de chaleur (25) pour simuler la chaleur d'une turbine de l'hélicoptère.

10. Simulateur selon l'une des revendications 1 à 9,
**caractérisé par**
une unité de commande (26) qui est configurée pour couper l'alimentation électrique du boîtier de formation (3) en fonction d'un signal d'urgence fourni par un dispositif de sécurité.

11. Conteneur (27), en particulier conteneur de fret ou de navire, avec un espacement dans laquelle plusieurs boîtiers de formation (3, 29) peuvent être disposées les uns à côté des autres, et un nombre de simulateurs (1) disposés dans l'espacement selon l'une des revendications 1 à 10.

12. Procédé de fabrication d'un simulateur (1) pour la formation d'un treuilliste (2) à un treuil, en particulier d'un hélicoptère, comprenant :
la disposition (501) d'une réplique de treuil (4) avec un câble de treuil (5) dans un boîtier de formation (3), le câble de treuil (5) étant conçu comme un câble sans fin qui est guidé par plusieurs poulies de renvoi (11 - 14) dans le boîtier de formation (3), un actionnement étant prévu pour au moins l'une des poulies de renvoi (11 - 14), dans lequel la réplique de treuil (4) comprend deux tourets (9, 10) sur lesquels le câble de treuil (5) peut être enroulé et déroulé, dans lequel un entraînement est prévu pour chacun des tourets (9, 10), dans lequel les entraînements sont adaptés pour régler différentes tensions du câble de treuil (5) pendant la formation dans le boîtier de formation (3),
l'aménagement (502) d'une plate-forme (6) pour le treuilliste (2) pour l'entraînement du câble de treuil (5) dans le boîtier de formation (3), et
la mise à disposition (503) d'un dispositif d'affichage (7) permettant d'émettre un affichage visuel simulé lorsque le câble de treuil (5) est entraîné.
